# EUROPEAN PATENT SPECIFICATION

(11) **EP 2 380 773 B1**
(45) Date of publication and mention of the grant of the patent: **10.07.2019**
(21) Application number: 11380037.9
(22) Date of filing: 20.04.2011
(51) Int. Cl.: B60Q 1/04

(54) **AUTOMOBILE OPTICAL GROUP AND METHOD OF MOUNTING THEREOF**
FAHRZEUGBELEUCHTUNGSEINHEIT UND VERFAHREN ZUR MONTAGE EINER SOLCHEN BELEUCHTUNGSEINHEIT
DISPOSITF D'ECLAIRAGE AUTOMOBILE ET SON PROCEDE DE MONTAGE

(30) Priority: 26.04.2010 ES 201030372 U
(43) Date of publication of application: 26.10.2011
(73) Proprietor: Seat, S.A., 08760 Martorell - Barcelona (ES)
(72) Inventor: Collado Giménez, Blay, 08760 Martorell-Barcelona (ES); Paris Garcia, Maria Teresa, 08760 Martorell-Barcelona (ES); Elvira Avila, Carlos, 08760 Martorell-Barcelona (ES)
(74) Representative: Elzaburu S.L.P.

(56) References cited:
- DE-A1- 10 234 225
- DE-A1- 10 353 374
- DE-A1-102008 051 290
- FR-A1- 2 783 797
- FR-A1- 2 852 285

## Description

### Field of the invention

The present invention refers to an anchorage for automobile optical groups, such as headlights and pilot lights, which enables the regulation of its position in the three space directions.

More specifically, the anchorage of the invention is of the type comprising a set of fixing points which immobilize the carcass of the optical group to the vehicle structure in the X, Y and Z directions, belonging to a system of axes the origin of which is in the optical group and whose X axis coincides with the direction of the beam of light of said optical group.

### Background of the invention

Automobile headlights are mounted in the frontal structure thereof through several fixings, which prevent the movement of the headlight, and all that so as to secure their position, once mounted.

In order to be able to adjust its correct position, the fixings of headlights nowadays have different adjustment systems, which enable the correct placement of the headlight, but with the inconvenience that the fine adjustment of the headlight may require the dismounting of the surrounding parts which have been mounted before.

In current automobile design, many of them have bumpers covering the lower anchorages of the headlights making them inaccessible for their adjustment after mounting.

From IT TO980082 it is known a system which positions the headlight in the vehicle structure through several supports, which enable the adjustment providing clearance and a ball joint-shaped support around which the whole assembly rotates.

From FR 2 764 851 and FR 2 693 961 there are known systems to fix the orientation of the beam of light through the rotation of the position of reflective elements of the headlight, but not of the position of the entire set through its movement.

From DE 19835047 it is known a device for the adjustable fixing of a headlight which has two upper supports and two lower supports which allow the movement of the headlight only in the transverse horizontal direction of the vehicle fixing the position in the longitudinal and transverse vertical directions of the vehicle. This system is based on supports, moving in the transverse horizontal direction with respect to the carcass of the headlight housed in the lower supports of the headlight and fixed to the chassis, which have two guiding grooves and a complex element which rotates to distinguish between the mounting position and the displacement position. This system has the disadvantage that the upper supports only have clearance to allow movement, but do not collaborate with the adjustment, while the lower supports are very complex parts and only allow the adjustment in one direction. Given their double function of support and adjustment guide, the supports are very complex and need two opposite positions in 90°, one for their mounting and another for the adjustment.

From FR2783797 it is known a device in a vehicle that includes a body on which is fixed a front face carrying at least one optical block, and complementary means for positioning the optical unit in a longitudinal direction (X) and a transverse horizontal direction (Y) of the vehicle. These positioning means are carried by the body and the optical block and cooperate with each other. The positioning means include complementary abutment surfaces carried by the optical block and a flange of the body. The optical block is hung on the front face with means presetting of the optical block on the front prior to the mounting of this front face on the body and means for permanently fastening the light unit after mounting of the front face on the body.

An optical group according to the preamble of claim 1 is known from FR 2 852 285.

### Description of the invention

The object of the present invention is an anchorage for optical groups which enables to facilitate and secure the adjustment and mounting of the optical group, headlight, or pilot lights, to the chassis of the vehicle without any need to dismount surrounding parts which have to be mounted again later if the first mounting of the headlight is not satisfactory. All of this thanks to an innovative anchorage which initially fixes the degree of freedom in Z (transverse vertical displacement with respect to the beam of light direction) of the headlight and it always leaves two degrees of freedom X (longitudinal displacement with respect to the beam of light direction) and Y (transverse horizontal displacement with respect to the beam of light direction).

To that end, the invention provides an automobile optical group according to claim 1 and a method of mounting such an optical group according to claim 3.

According to the invention, the anchorage comprises a first fixing point, which has means to immobilize the carcass of the optical group to the structure of the vehicle only in the Z direction, and at least a second fixing point, and preferably two, which have means to immobilize the carcass of the optical group to the structure of the vehicle in the X and Y directions.

According to an embodiment, the first fixing point will be located at a lower height than the second fixing point(s).

The immobilization means of the first lower fixing point are constituted by a skid which is connected on one side to the optical group, through guides belonging to the optical group and parallel to the beam of light of said optical group, while on the other side it is fixed to the structure of the vehicle through a set of screw and jam nut. The skid is mounted on the guides of the optical group with transverse clearance and longitudinal freedom of displacement, conditions which allow the freedom of movement in the X and Y directions which will be fixed to the upper anchorage points.

With the anchorage of the invention, the position of the optical group can be fixed on the structure bearing it in the Z direction (vertical), while its position in the other two directions X and Y can be adjusted, after mounting the bumper or another part covering the fixing and making it inaccessible later.

Also, the other fixings, of the second fixing points, which are accessible through the upper part, allow the adjustment in the other two directions X and Y and their later fixing, and they can even allow a slight adjustment in the Z direction by pivoting on the first fixing point.

The simplicity of the lower support enables one fixing to assume the function of vertical direction positioning, for example, a screw, while the function that enables the adjustment of the other two horizontal directions can be assumed by a guiding system and a skid with 2 degrees of freedom in X and Y.

Thanks to the fact that the first fixing point allows elevated fixing and still allows the adjustment in the other two directions, additional parts covering it can be mounted definitively, such as for example, a vehicle front bumper, covering it.

This, added to the upper fixings, accessible from the upper part of the set, allows for more varied designs of the other surrounding parts.

Also, it is shown, through the vibration tests, that the headlights or pilot lights which have at least one lower fixing withstand those vibrations better than those without lower fixing and therefore this invention benefits from the fixing appropriately maintaining the weight and withstanding the vibrations of the headlight or pilot light, reducing the risk of breaking of any part due to the contact between adjoining elements.

The skid can be constituted by a base platform the longitudinal edges of which are housed in other opposite channels of the optical group, channels which define the skid guides. From the platform there protrudes an upper transverse partition, which has an oblong opening through which there passes a set of screw and fixing nut of the optical group in the Z direction.

### Brief description of the drawings

The attached drawings show, as an example, an embodiment of the anchorage of the invention for fixing automobile optical groups. In the drawings:
Figure 1 shows a front perspective view of a headlight mounted on the structure or chassis of an automobile; with the anchorage of the invention.
Figure 2 shows a rear perspective view of the optical group included in figure 1, with the anchorage of the invention.
Figure 3 corresponds to detail A of figure 2, at a greater scale.
Figure 4 is a longitudinal sectional view of the lower fixing point of the anchorage of the invention, taken according to the cutting line IV-IV of figure 3.
Figure 5 is an elevated view of the skid which forms part of the lower fixing point, mounted on the structure or chassis of the automobile.
Figure 6 is a vertical sectional view of the skid mounted on the structure or chassis of the automobile, taken according to the cutting line VI-VI of figure 5.
Figure 7 is a similar view to figure **1**, with the front bumper mounted on the structure or chassis of the automobile, partially covering the lower part of the optical group.
Figure 8 is a diametrical sectional view of a possible embodiment of one of the upper fixing points.
Figure 9 is a diametrical sectional view of an embodiment variant of one of the upper fixing points.

### Detailed description of an embodiment

The characteristics and advantages of the invention can be understood better with the following description, of an embodiment example shown in the aforementioned drawings.

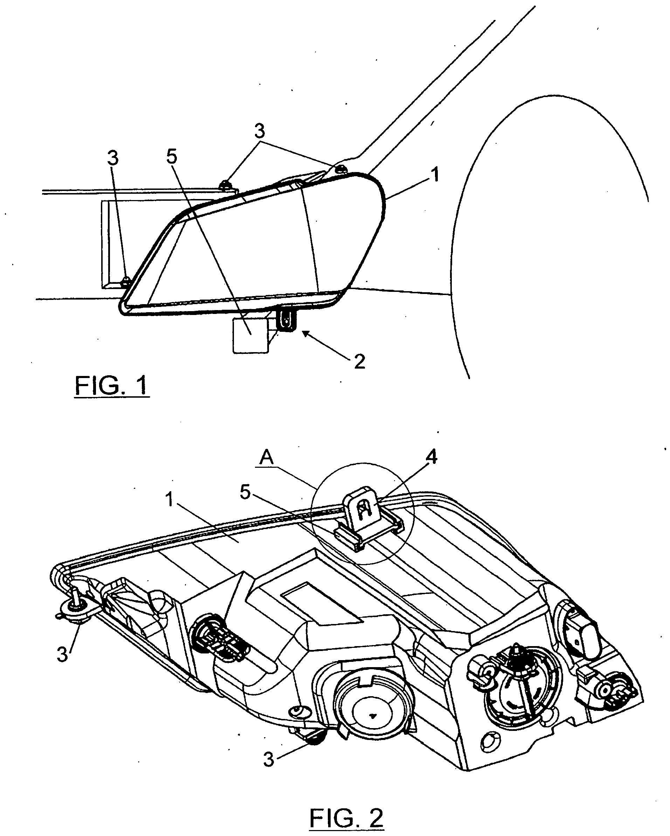

Figure 1 shows a partial perspective front view of an automobile including an optical group constituted by a headlight the carcass 1 of which is fixed to the structure or chassis of the automobile through a lower fixing point 2 and three second fixing points which are indicated with reference number 3, the first fixing point being located at a lower height than the second fixing points. The first lower fixing point 2 has means to immobilize the carcass 1 of the headlight to the automobile structure in the Z direction. Through the second upper fixing points 3 the carcass 1 of the headlight is fixed to the automobile structure in directions X and Y.

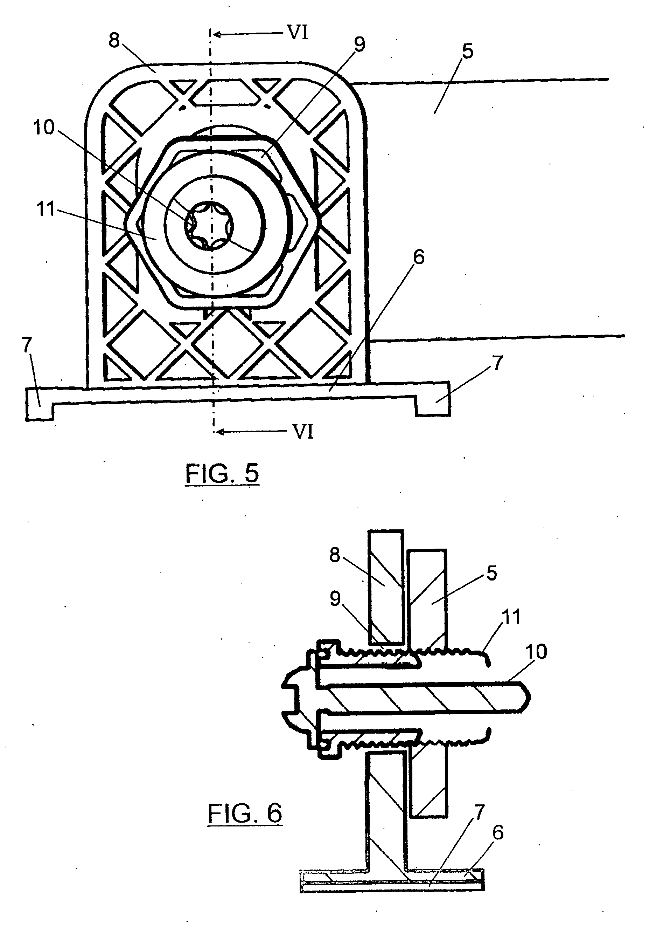

The first lower fixing point is constituted, as it can be seen in figures 2 to 4, by a skid which is indicated in general with reference 4 and which connects on one side with the carcass 1 of the headlight through guides 5 belonging to said headlight, and on the other side to the chassis or structure of the automobile, figure 1, as it can be seen in figures 5 and 6.

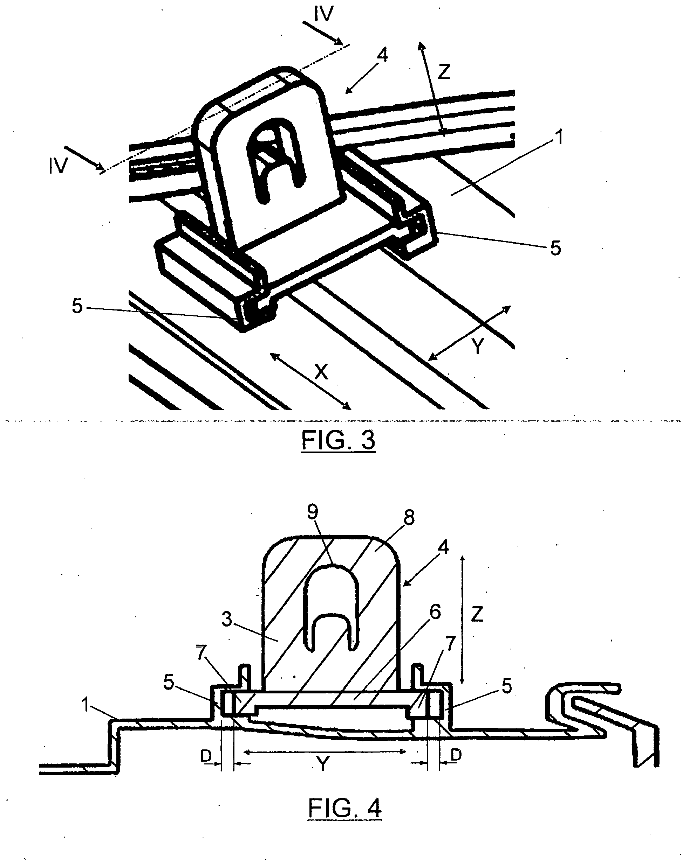

In the example described and as it can be better seen in figures 3 and 4, the skid 4 is constituted by a base platform 6 from which there protrude from the lower part two lower longitudinal feet 7, which are housed in the guides 5, belonging to the carcass of the headlight 1, consisting of opposite parallel channels in which the longitudinal feet 7 are housed with certain clearance D, figure 4. From the platform 6 there protrudes, on the side opposite the one of the feet 7, a transverse partition 8, perpendicular to the lower longitudinal feet 7, transverse partition which has an oblong opening 9 through which there passes a set of screw 10 and nut 11 for its fixing to the structure or chassis of the automobile, as shown in figures 5 and 6.

With the constitution described, the skid 4, once mounted on the guides 5, figure 4, is prevented from moving with respect to the carcass 1 of the headlight in the Z direction, while it can move in the Y direction, thanks to the clearances D, and also along the guides 5, parallel to the direction of the beam of light and therefore to the X direction.

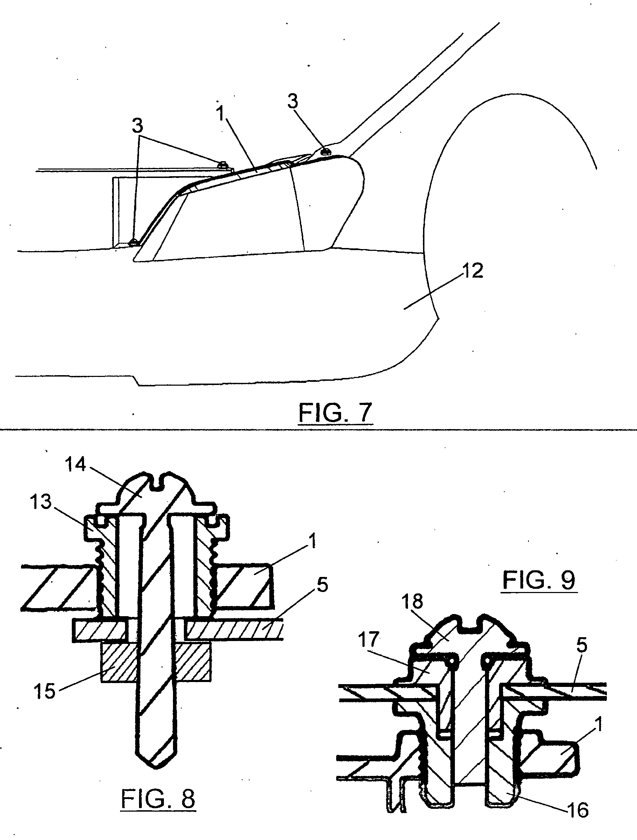

Through the second upper fixing points 3 it is attained the immobilization of the carcass 1 of the headlight in the structure or chassis of the automobile in the X and Y directions. Figure 6 shows how the partition 8 forms part of the skid 4 which is fixed to the structure or chassis of the automobile, once the desired position of the headlight has been selected according to the Z direction, corresponding to the transverse vertical direction with respect to the direction of the beam of light of the headlight. Once this position has been selected, additional parts can be mounted covering the first lower fixing point 2, such as the automobile bumper 12, figure 7. Next, the transverse horizontal positions, in the Y axis, and the longitudinal position, in the X axis, can be fixed through the second upper fixing points 3, which can be constituted by a set of nut 13 and screw 14, as shown in figure 8. In this fixing, the nut 13 rests on the structure or chassis of the automobile. When the nut is rotated, the carcass 1 of the headlight is elevated or lowered. Once the exact height situation is chosen, the position is fixed permanently by the screw 14 and jam nut 15.

Figure 9 shows another possible embodiment of the second upper fixing points 3, through a nut 16 which can be regulated elevated over the carcass 1 of the headlight, being located under or over the structure or chassis of the automobile. The nut 16 is inaccessible to regulate the distance between the structure or chassis of the automobile and the carcass 1 of the headlight. The access is attained through an opening which allows the insertion of a nut 17 which is grooved in a manner complementary to the lower part of the opening of the nut 16. By rotating the accessible part of the nut 17, the nut 16 is rotated, which is the one that regulates the height between the headlight and the structure or chassis of the automobile. Finally, the position is fixed with a jam screw 18.

The embodiments shown in figures 8 and 9 only constitute possible embodiment examples of the second upper fixing points 3.

To summarize, for the mounting of the carcass 1 of the headlight the position thereof is fixed in the Z direction through the set of nut 11 and screw 10 which passes through the oblong opening 9 of the skid 4. Next, the fixing in the X and Y directions is attained through the second upper fixing points 3 which, in the example shown in the drawings are constituted by three sets which can correspond to the embodiments shown in figures 8 and 9.

In order to regulate again the position of the headlight in the transverse and longitudinal horizontal directions, that is, in the directions of the X and Y axes, the first step is to release the fixing defined by the second upper fixing points 3 and move the headlight which will displace freely in said directions thanks to the constitution of the skid 4 and to the clearance between the platform 6 and the guides 5, described with reference to figure 4. Once the desired position is attained, the headlight is fixed again through the tightening of the second fixing points 3, without needing to dismount the bumper 12 or any other additional part covering the lower fixing point 2.

## Claims

1. Automobile optical group comprising a carcass (1) and an anchorage, through a set of fixing points immobilize the carcass (1) of the optical group to the structure of a vehicle in the X, Y and Z directions, belonging to a system of axes the origin of which is in the optical group and whose X axis coincides with the direction of the beam of light of said optical group, the Y direction being the transverse horizontal displacement with respect to the beam of light direction, and the Z direction the transverse vertical displacement with respect to the beam of light direction; wherein the anchorage comprises a first fixing point (2), which has means to immobilize the carcass (1) of the optical group to the structure of the vehicle only in the Z direction, and at least a second fixing point (3) which has means constituted by sets of screw (14, 18) and nut (15, 16, 17) to immobilize the carcass (1) of the optical group to the structure of the vehicle in the X and Y directions, the immobilization means of the first fixing point (2) being constituted by a skid (4) which is connected on one side to the optical group, through guides (5) belonging to the optical group, parallel to the beam of light of said optical group, while the other side is to be fixed to the structure of the vehicle through a set of jam screw (10) and nut (11), **characterised in that** the skid (4) comprises a base platform (6) with longitudinal edges, while the optical group has two opposite channels, parallel to the direction of the beam of light of said optical group, which define the guides (5) in which the longitudinal edges of the skid platform (6) are housed with freedom of longitudinal movement along the X direction and with transverse clearance along the Y direction between said edges and channels, with a transverse partition (8) also protruding from the platform (6), on the side opposite the one facing the optical group, said partition (8) having an oblong opening (9) through which there passes the set of jam screw (10) and nut (11) for fixing the optical group to the structure of the vehicle in the Z direction, once the desired position of the optical group has been selected according to the Z direction, wherein the skid (4) allows the freedom of movement in the X and Y directions which are then to be fixed through the at least a second fixing point (3).

2. Automobile optical group comprising an anchorage according to claim 1, **characterized in that** the base platform (6) has in the lower part and adjacent to its longitudinal edges, longitudinal feet (7) which are housed, together with said edges, in the opposite channels of the optical group.

3. Mounting method of an automobile optical group a carcass (1) and an anchorage through a set of fixing points which immobilizes the carcass (1) of the optical group to the structure of a vehicle in the X, Y and Z directions, belonging to a system of axes the origin of which is in the optical group and whose X axis coincides with the direction of the beam of light of said optical group, the Y direction being the transverse horizontal displacement with respect to the beam of light direction, and the Z direction the transverse vertical displacement with respect to the beam of light direction; wherein the anchoring comprises a first fixing point (2), which has means to immobilize the carcass (1) of the optical group to the structure of the vehicle only in the Z direction, and at least a second fixing point (3) which has means to immobilize the carcass (1) of the optical group to the structure of the vehicle in the X and Y directions; the immobilization means of the first fixing point (2) being constituted by a skid (4) which is connected on one side to the optical group, through guides (5) belonging to the optical group, parallel to the beam of light of said optical group, while the other side is to be fixed to the structure of the vehicle through a set of jam screw (10) and nut (11), wherein the skid (4) comprises a base platform (6) with longitudinal edges, while the optical group has two opposite channels, parallel to the direction of the beam of light of said optical group, which define the guides (5) in which the longitudinal edges of the skid platform (6) are housed, with freedom of longitudinal displacement along the X direction and with transverse clearance along the Y direction between said edges and channels, with a transverse partition (8) also protruding from the platform (6), on the side opposite the one facing the optical group, said partition (8) having an oblong opening (9) through which there passes the set of screw (10) and nut (11) for fixing the optical group to the structure of the vehicle in the Z direction, wherein the mounting method comprises the following steps:
- initially fixing the optical group to the structure of chassis of the vehicle in the Z direction by fixing the partition (8) which has the oblong opening (9) through which there passes the set of screw (10) and nut (11) and leaving two degrees of freedom X, Y by the skid (4) being mounted on the guides (5) of the optical group with transverse clearance and longitudinal freedom of displacement,
- next fixing the optical group to the structure of the vehicle in the X and Y directions by fixing the at least second fixing point (3) by sets of screws (14, 18) and nut (15, 16, 17).

## Patentansprüche

1. Fahrzeugbeleuchtungseinheit umfassend einen Korpus (1) und eine Verankerung durch eine Reihe von Befestigungspunkte zum Immobilisieren des Korpus (1) der Beleuchtungseinheit an der Struktur des Fahrzeugs in der X-, Y- und Z-Richtung, gehörend zu einem Achsensystem, dessen Ursprung in der Beleuchtungseinheit ist und dessen X-Achse mit der Richtung des Lichtstrahls dieser Beleuchtungseinheit übereinstimmt, wobei die Y-Richtung die horizontale Querverschiebung in Bezug auf die Lichtstrahlrichtung und die Z-Richtung die vertikale Querverschiebung in Bezug auf die Lichtstrahlrichtung ist; worin die Verankerung einen ersten Befestigungspunkt (2) umfasst, der Mittel zum Immobilisieren des Korpus (1) der Beleuchtungseinheit an der Struktur des Fahrzeugs nur in der Z-Richtung aufweist, und mindestens einen zweiten Befestigungspunkt (3), der Mittel aufweist, die aus Sätzen aus Schrauben (14, 18) und Muttern (15, 16, 17) gebildete sind, um den Korpus (1) der Beleuchtungseinheit an der Struktur des Fahrzeugs in den X- und Y-Richtungen zu immobilisieren, wobei die Immobilisierungsmittel des ersten Befestigungspunkts (2) aus einem Schlitten (4) gebildet sind, der an einer Seite der Beleuchtungseinheit durch Führungen (5) verbunden ist, die zur Beleuchtungseinheit gehören, parallel zum Lichtstrahl dieser Beleuchtungseinheit, während die andere Seite an der Struktur des Fahrzeugs durch einen Satz aus Klemmschraube (10) und Mutter (11) zu befestigen ist, **dadurch gekennzeichnet, dass** der Schlitten (4) eine Basisplattform (6) mit Längskanten umfasst, während die Beleuchtungseinheit zwei gegenüberliegende Kanäle parallel zur Richtung des Lichtstrahls dieser Beleuchtungseinheit aufweist, die die Führungen (5) definieren, in denen die Längskanten der Schlittenplattform (6) mit Bewegungsfreiheit in der Längsrichtung entlang der X-Richtung, mit Querspiel entlang der Y-Richtung zwischen diesen Kanten und Kanälen aufgenommen sind, mit einer Querabtrennung (8), die ebenfalls aus der Plattform (6) an der Seite gegenüber der der Beleuchtungseinheit zugewandten Seite herausragt, wobei diese Abtrennung (8) eine längliche Öffnung (9) aufweist, durch die der Satz aus Klemmschraube (10) und Mutter (11) zum Befestigen der Beleuchtungseinheit an der Struktur des Fahrzeugs in Z-Richtung verläuft, nachdem die gewünschte Position der Beleuchtungseinheit laut der Z-Richtung ausgewählt wurde, worin der Schlitten (4) die Bewegungsfreiheit in der X- und Y-Richtung erlaubt, die dann durch den mindestens zweiten Befestigungspunkt (3) zu befestigen sind.

2. Fahrzeugbeleuchtungseinheit umfassend eine Verankerung nach Anspruch 1, **dadurch gekennzeichnet, dass** die Basisplattform (6) in dem unteren Teil und angrenzend an ihre Längskanten Längsfüße (7) aufweist, die zusammen mit diesen Kanten in den gegenüberliegenden Kanälen der Beleuchtungseinheit aufgenommen sind.

3. Verfahren zur Montage einer Fahrzeugbeleuchtungseinheit, eines Korpus (1) und einer Verankerung durch eine Reihe von Befestigungspunkten, die den Korpus (1) der Beleuchtungseinheit an der Struktur eines Fahrzeugs in der X-, Y- und Z-Richtung immobilisieren, gehörend zu einem Achsensystem, dessen Ursprung in der Beleuchtungseinheit ist und dessen X-Achse mit der Richtung des Lichtstrahls dieser Beleuchtungseinheit übereinstimmt, wobei die Y-Richtung die horizontale Querverschiebung in Bezug auf die Lichtstrahlrichtung und die Z-Richtung die vertikale Querverschiebung in Bezug auf die Lichtstrahlrichtung ist; worin die Verankerung einen ersten Befestigungspunkt (2) umfasst, der Mittel zum Immobilisieren des Korpus (1) der Beleuchtungseinheit an der Struktur des Fahrzeugs nur in der Z-Richtung aufweist, und mindestens einen zweiten Befestigungspunkt (3), der Mittel aufweist, um den Korpus (1) der Beleuchtungseinheit an der Struktur des Fahrzeugs in den X- und Y-Richtungen zu immobilisieren; wobei die Immobilisierungsmittel des ersten Befestigungspunkts (2) aus einem Schlitten (4) gebildet sind, der an einer Seite der Beleuchtungseinheit durch Führungen (5) verbunden ist, die zur Beleuchtungseinheit gehören, parallel zum Lichtstrahl dieser Beleuchtungseinheit, während die andere Seite an der Struktur des Fahrzeugs durch einen Satz aus Klemmschraube (10) und Mutter (11) zu befestigen ist, worin der Schlitten (4) eine Basisplattform (6) mit Längskanten umfasst, während die Beleuchtungseinheit zwei gegenüberliegende Kanäle parallel zur Richtung des Lichtstrahls dieser Beleuchtungseinheit aufweist, die die Führungen (5) definieren, in denen die Längskanten der Schlittenplattform (6) mit Verschiebungsfreiheit in der Längsrichtung entlang der X-Richtung und mit Querspiel entlang der Y-Richtung zwischen diesen Kanten und Kanälen aufgenommen sind, mit einer Querabtrennung (8), die ebenfalls aus der Plattform (6) an der Seite gegenüber der der Beleuchtungseinheit zugewandten Seite herausragt, wobei diese Abtrennung (8) eine längliche Öffnung (9) aufweist, durch die der Satz aus Schraube (10) und Mutter (11) zum Befestigen der Beleuchtungseinheit an der Struktur des Fahrzeugs in der Z-Richtung verläuft, worin das Verfahren zur Montage die folgenden Schritte umfasst:
- zunächst Befestigen der Beleuchtungseinheit an der Chassisstruktur des Fahrzeugs in der Z-Richtung, indem die Abtrennung (8) befestigt wird, die die längliche Öffnung (9) aufweist, durch die der Satz aus Schraube (10) und Mutter (11) verläuft, und zwei Freiheitsgrade X, Y an dem Schlitten (4) gelassen werden, der an den Führungen (5) der Beleuchtungseinheit mit Querspiel und Verschiebungsfreiheit in Längsrichtung montiert wird,
- anschließend Befestigen der Beleuchtungseinheit an der Struktur des Fahrzeugs in der X- und Y-Richtung, indem der mindestens zweite Befestigungspunkt (3) durch Sätze aus Schrauben (14) und Muttern (15, 16, 17) befestigt wird.

## Revendications

1. Dispositif d'éclairage automobile comprenant une carcasse (1) et un ancrage, à travers un ensemble de points de fixation pour rendre la carcasse (1) du dispositif d'éclairage immobile par rapport à la structure d'un véhicule dans les sens X, Y et Z, appartenant à un système d'axes dont l'origine se trouve dans le dispositif d'éclairage et dont l'axe X coïncide avec le sens du faisceau lumineux dudit dispositif d'éclairage, le sens Y étant le déplacement transversal horizontal par rapport au sens du faisceau lumineux, et le sens Z le déplacement transversal vertical par rapport au sens du faisceau lumineux ;
où l'ancrage comprend un premier point de fixation (2), qui possède des moyens de fixation pour rendre la carcasse (1) du dispositif d'éclairage immobile par rapport à la structure du véhicule uniquement dans le sens Z, et au moins un second point de fixation (3) qui possède des moyens constitués de jeux de vis (14, 18) et d'écrou (15, 16, 17) pour rendre la carcasse (1) du dispositif d'éclairage immobile par rapport à la structure du véhicule dans les sens X et Y, les moyens d'immobilisation du premier point de fixation (2) étant constitués d'un sabot (4) qui est connecté d'un côté au dispositif d'éclairage, via des guides (5) appartenant au dispositif d'éclairage, parallèle au faisceau lumineux dudit dispositif d'éclairage, tandis que l'autre côté doit être fixé à la structure du véhicule via un jeu de vis de blocage (10) et d'écrou (11),
**caractérisé en ce que** le sabot (4) comprend une plateforme de base (6) avec des bords longitudinaux, tandis que le dispositif d'éclairage possède deux canaux opposés, parallèles au sens du faisceau lumineux dudit dispositif d'éclairage, qui définissent les guides (5) dans lesquels les bords longitudinaux de la plateforme du sabot (6) sont logés avec une liberté de mouvement longitudinal le long du sens X et, avec un espace transversal le long du sens Y entre lesdits bords et canaux, avec une cloison transversale (8) dépassant également de la plateforme (6), du côté opposé à celui faisant face au dispositif d'éclairage, ladite cloison (8) ayant une ouverture oblongue (9) à travers laquelle passe le jeu de vis de blocage (10) et d'écrou (11) pour fixer le dispositif d'éclairage à la structure du véhicule dans le sens Z, une fois que la position souhaitée du dispositif d'éclairage a été sélectionnée en fonction de en fonction du sens Z,
où le sabot (4) permet la liberté de mouvement dans les sens X et Y qui doivent alors être fixés via le au moins un second point de fixation (3).

2. Dispositif d'éclairage automobile comprenant un ancrage en fonction de la revendication 1, **caractérisé en ce que** la plateforme de base (6) possède dans la partie inférieure et adjacents à ses bords longitudinaux, des pieds longitudinaux (7) qui sont logés, conjointement avec lesdits bords, dans les canaux opposés du dispositif d'éclairage.

3. Procédé de montage d'un dispositif d'éclairage automobile, d'une carcasse (1) et d'un ancrage à travers un ensemble de points de fixation qui immobilise la carcasse (1) du dispositif d'éclairage par rapport à la structure d'un véhicule dans les sens X, Y et Z, appartenant à un système d'axes dont l'origine se trouve dans le dispositif d'éclairage et dont l'axe X coïncide avec le sens du faisceau lumineux dudit dispositif d'éclairage, le sens Y étant le déplacement transversal horizontal par rapport au sens du faisceau lumineux, et le sens Z le déplacement transversal vertical par rapport au sens du faisceau lumineux ;
où l'ancrage comprend un premier point de fixation (2), qui possède des moyens pour immobiliser la carcasse (1) du dispositif d'éclairage par rapport à la structure du véhicule uniquement dans le sens Z, et au moins un second point de fixation (3) qui possède des moyens pour immobiliser la carcasse (1) du dispositif d'éclairage par rapport à la structure du véhicule dans les sens X et Y ; les moyens d'immobilisation du premier point de fixation (2) étant constitués d'un sabot (4) qui est connecté d'un côté au dispositif d'éclairage, via des guides (5) appartenant au dispositif d'éclairage, parallèle au faisceau lumineux dudit dispositif d'éclairage, tandis que l'autre côté doit être fixé à la structure du véhicule via un jeu de vis de blocage (10) et d'écrou (11),
où le sabot (4) comprend une plateforme de base (6) avec des bords longitudinaux, tandis que le dispositif d'éclairage possède deux canaux opposés, parallèles au sens du faisceau lumineux dudit dispositif d'éclairage, qui définissent les guides (5) dans lesquels les bords longitudinaux de la plateforme du sabot (6) sont logés, avec une liberté de déplacement longitudinal le long du sens X et avec un espace transversal le long du sens Y entre lesdits bords et canaux, avec une cloison transversale (8) dépassant également de la plateforme (6), du côté opposé à celui faisant face au dispositif d'éclairage, ladite cloison (8) ayant une ouverture oblongue (9) à travers laquelle passe le jeu de vis (10) et d'écrou (11) pour fixer le dispositif d'éclairage à la structure du véhicule dans le sens Z,
où le procédé de montage comprend les étapes suivantes :
- fixer initialement le dispositif d'éclairage à la structure de châssis du véhicule dans le sens Z en fixant la cloison (8) qui possède l'ouverture oblongue (9) à travers laquelle passe le jeu de vis (10) et d'écrou (11) et en laissant deux degrés de liberté X, Y près du sabot (4) étant monté sur les guides (5) du dispositif d'éclairage avec un espace transversal et une liberté longitudinale de déplacement,
- ensuite fixer le dispositif d'éclairage à la structure du véhicule dans les sens X et Y en fixant le au moins second point de fixation (3) par des jeux de vis (14, 18) et d'écrou (15, 16, 17).
